# NEW EUROPEAN PATENT SPECIFICATION

(11) **EP 2 643 238 B2**
(45) Date of publication and mention of the opposition decision: **08.02.2023**
(45) Mention of the grant of the patent: 25.05.2016
(21) Application number: 10784962.2
(22) Date of filing: 25.11.2010
(51) Int. Cl.: B65D 77/20

(54) **SEALED CONTAINER FOR FOODSTUFFS**
VERSIEGELTER BEHÄLTER FÜR NAHRUNGSMITTEL
ENCEINTE ÉTANCHE POUR ALIMENTS

(43) Date of publication of application: 02.10.2013
(73) Proprietor: R. Faerch Plast A/S, 7500 Holstebro (DK)
(72) Inventor: LYNGGAARD, Thomas, DK-7570 Vemb (DK); JENSEN, Flemming, Troldtoft, DK-7500 Holstebro (DK)
(74) Representative: Zacco Denmark A/S
(86) International application number: PCT/DK2010/050319
(87) International publication number: WO 2012/069050

(56) References cited:
- EP-A1- 1 826 139
- EP-A2- 1 559 658
- WO-A1-2008/017308
- WO-A1-2009/121834
- WO-A2-2011/083342
- GB-A- 2 450 366
- US-A- 2 988 208

## Description

The present invention relates to a sealed container for foodstuffs.

### Background of the invention

In the food industry, it is well-known to pack different kinds of foodstuff into sealed containers made from a plastic material. Such containers may typically consist of some form of tray, which is sealed with a lid or a lidding film to protect the foodstuff inside the tray (WO 2008/017308 A1).

Often, the tray and the lid or lidding film are made from amorphous polyethylene terephthalate (APET). This material is preferred due to its characteristics, which make it very suitable for storage of foodstuffs, for instance a high transparency and a significantly higher impermeability to oxygen than other plastic materials traditionally used for making trays, such as polystyrene (PS) or polypropylene (PP).

Depending on the type of foodstuffs to be packed and stored in the containers, there are different requirements to be met by the seal. In general, the seal must be able to withstand cooling, storage and transportation without the lid or lidding film loosening from the tray. For some kinds of foodstuff, such as fresh meat, the seal must also be gas-proof in order to keep a modified atmosphere inside the container for a specified number of days in which the foodstuff must be able to be stored before use.

If the sealing media in the tray as well as in the lid or lidding film is APET, such a seal can be obtained by heating the lid or lidding film and the sealing rim of the tray to which the lid or lidding film is to be sealed with a temperature of around 180 °C and pressing the two parts tightly together for a short period of time. This heat sealing procedure does not involve actual melting of the APET, but the material becomes soft and secondary chemical bonds occur between the sealing media of the tray and the sealing media of the lid or lidding film.

A well-known problem connected to heat sealing involving APET sealing media is that if the sealing rim of the tray is contaminated with even rather small amounts of food substances, for instance from meat juice when packing fresh meat, the seal will not be gas-proof. This means that the seal cannot keep the modified atmosphere inside the container for the specified amount of time, which results in accelerated decay of the foodstuff stored in the container.

Another problem is that the temperature needed for heat sealing APET often causes the sealing rim of the trays to warp.

The most used solutions to these problems involve the use of multi-layer plastic sheets or film for producing the tray and the lid or lidding film. Besides APET, these multi-layer sheets or film comprise a sealing layer of another type of plastic material, which is more meltable than APET, such as PP, PS or (most typical) PE, which is laminated, extrusion coated or co-extruded onto the APET layer. If the other material is PE, the trays are known as APET-PE trays. A highly modified polyethylene terephthalate (PET) may also be used as sealing layer, but this material is rather expensive and requires higher pressure and temperature during the sealing process than the other materials, which reduces the production rate and increases the costs of the sealing equipment. Even with the required process parameters, highly modified polyethylene terephthalate is still sensitive to contamination and sealing rim warpage.

The use of such multi-layer materials with a sealing layer of another plastic material solves the above-specified problems because, unlike APET, these materials do actually melt during the heat sealing process at a temperature, which is lower than the one needed for heat sealing APET. This means that heat sealing of these other plastic materials result in stronger and tighter seals than heat sealing of APET. In fact, if they are made properly, these seals will be made gas-proof even if the sealing rim should be contaminated as described above.

From a sealing point of view, the above-described kind of solutions is ideal. However, it has some production-related drawbacks. When the trays are thermoformed, 30-50 % of the plastic sheet from which they are formed do not become a part of a tray but end up as so-called skeletal waste. In order to reduce the waste from the production, this skeletal waste is traditionally reused in extrusion of new sheets. This is no problem, if the sheet is made from pure APET. In the case of multi-layer sheets, however, the APET will be contaminated with the material from the sealing layer, typically PE.

This contamination of the reused APET material causes serious production problems in the extrusion and thermoforming processes relating to opacity, sagging and brittleness of the resulting trays and lids or lidding film. Thus, the use of PE or another material as a sealing layer along with the APET layer in a multi-layer sheet either results in a decreased quality of the produced containers or in an increased amount of waste, which add costs to the production.

It is an object of the present invention to provide containers that overcome the above-mentioned problems without sacrificing the advantages related to the use of APET as the basis material of trays as well as lids or lidding film.

### Brief description of the invention

The present invention relates to a container for foodstuff, said container comprising a tray formed from a sheet of material comprising more than one layer, where the material of each of the layers of the formed tray comprises at least 85 % of amorphous polyethylene terephthalate, said tray comprising a bottom part, one or more side walls and a peripheral sealing rim at its top, said sealing rim having a substantially flat upward facing sealing surface, wherein, in addition to the material from which the tray is made, the sealing surface is provided with a layer of an adhesive along the full circumference of the tray.

The provision of a layer of a properly chosen adhesive on the sealing surface makes it possible to obtain gas-proof seals with trays made of an APET without any sealing layers of PE or the like, even if the sealing rim is contaminated with meat juice or the like as described above.

It should be noticed that by the expression "amorphous polyethylene terephthalate" is meant polyethylene terephthalate, which is essentially amorphous in the sense that proper steps have been taken in order to minimise the crystallisation that, to some degree, will always take place in the material. Such steps include the choice of a proper type of PET (in relation to the contents of comonomers in the material) and minimising of the period of time, in which the material has a temperature, at which there is a significant rate of crystallisation.

In an embodiment of the invention, the material of each of the layers of the formed tray has an intrinsic viscosity between 0.6 dl/g and 1.1 dl/g, preferably between 0.7 dl/g and 0.9 dl/g, most preferably between 0.7 dl/g and 0.8 dl/g.

The unit "dl/g" uses for quantifying the intrinsic viscosity is an abbreviation of the expression "decilitres per gram", otherwise known as inverse concentration.

The use of PET with intrinsic viscosities within these ranges has proved to be advantageous in that it gives a good balance between processability and product properties, such as transparency and impact properties.

In an embodiment of the invention, the amorphous polyethylene terephthalate comprises up to 15 %, preferably between 1.5 % and 2 %, of a comonomer.

In a further embodiment of the invention, the comonomer is isophthalic acid (IPA), cyclohexanedimethanol (CHDM) or diethylene glycol.

The use of amorphous PET materials, especially ones comprising one or more of the specified comonomers in the specified amounts is advantageous for obtaining trays made of amorphous PET in that these materials are characterised in having low rates of crystallisation, which facilitates the production of transparent trays.

In an embodiment of the invention, the thickness of material of the tray is between 200 µm (micrometers) and 1200 µm.

If the thickness of material of the tray is chosen within this range, the requirements regarding stiffness, barrier properties and impact resistance are all fulfilled.

In an embodiment of the invention, the adhesive is of a type that reaches a free flowing state at a temperature below 150 °C and is solid and non-tacky at room temperature.

By using an adhesive with such properties, it is assured that the adhesive can easily be applied to the sealing surface by well-proven and safe methods, such as roll coating.

In an embodiment of the invention, the adhesive comprises an ethylene copolymer, an ethylene terpolymer or a blend of such polymers, as well as a wax.

In a further embodiment of the invention, the adhesive comprises between 10 % and 60 % of a petroleum wax or a polyethylene wax and between 40 % and 90 % of an ethylene copolymer, an ethylene terpolymer or a blend of such polymers.

In yet a further embodiment of the invention, the ethylene copolymer(s) and/or ethylene terpolymer(s) comprise at least 60 % of ethylene, at least 5 % of a first monomer, said first monomer being chosen from the list containing: vinyl acetate, methacrylic acid, alkyl acrylate and alkyl methacrylate, and optionally between 0.1 % and 5 % of a second monomer, said second monomer being chosen from the list containing: maleic acid, maleic anhydride, fumaric acid, acrylic acid and glycidyl methacrylate.

The use of an adhesive comprising ethylene co- and/or terpolymer(s) and wax, especially in the specified amounts and compositions is advantageous in that it has a proper melting point, is approved for use with foodstuff and enables for obtaining a gas-proof seal, when a lid is bonded to the sealing rim of the tray, even if the sealing rim is contaminated.

As it will be evident from the following, the expression "lid" should be understood as covering any kind of item that can be bonded to the sealing rim of the tray. Thus, both hard and dimensionally stable lids (flat as well as three-dimensional in shape) and soft and flexible films, which have to be kept outstretched before being bonded to the tray, are included.

In an aspect of the invention, the container further comprises a lid, which is bonded to the tray by means of the adhesive forming a gas-proof seal along the sealing rim.

In an embodiment of the invention, the lid is hard and dimensionally stable.

For some applications of the container, it is advantageous if a hard and dimensionally stable lid is used in order to avoid tearing or other kinds of puncturing of the lid.

In a further embodiment of the invention, the thickness of material of the hard and dimensionally stable lid is between 200 µm and 1200 µm.

If the thickness of material of the hard and stable lid is chosen within this range, the requirements regarding stiffness, barrier properties and impact resistance are all fulfilled.

In an embodiment of the invention, the hard and stable lid is made of amorphous polyethylene terephthalate.

The use of APET in the hard and stable lid is advantageous due to the material characteristics, which make it very suitable for storage of foodstuffs, such as formability, a high transparency and a high impermeability to oxygen as already mentioned above.

In an embodiment of the invention, the lid consists of a soft and flexible lidding film.

For economic and manufacturing reasons, it can be advantageous to use lids consisting of a soft and flexible film.

In a further embodiment of the invention, the thickness of material of the soft and flexible lid is between 15 µm and 100 µm.

If the thickness of material of the soft and flexible lid is chosen within this range, the requirements regarding strength and barrier properties are all fulfilled.

In an embodiment of the invention, the soft and flexible lid is made of polyethylene terephthalate.

The use of PET in the soft and flexible lid is advantageous due to the material characteristics, which make it very suitable for storage of foodstuffs, such as a high transparency and a high impermeability to oxygen as already mentioned above.

In an embodiment of the invention, at least a part of a lower surface of the lid is coated with a sealing layer of polyethylene, polyethylene copolymer or polyethylene terpolymer in order to be better adapted to be bonded to the sealing rim by a sealing process involving the use of heat and pressure.

Depending on the type of adhesive used, it may be necessary or at least advantageous to coat the parts of the lid that is meant to come in contact with the adhesive on the sealing rim of the tray with a suitable material other than the one from which the lid is made in order to assure a gas-proof seal even in the case of contamination of the sealing rim.

In an aspect of the invention, it relates to a method of producing a container for foodstuff, said method comprising the steps of forming a tray from a sheet of material comprising more than one layer, where the material of each of the layers of the formed tray comprises at least 85 % of amorphous polyethylene terephthalate, said tray comprising a bottom part, one or more side walls and a peripheral sealing rim at its top, said sealing rim having a substantially flat upward facing sealing surface and providing the sealing surface with a layer of an adhesive along the full circumference of the tray.

This method results in a tray with the advantages described above by means of well-proven and reliable production methods.

In an embodiment of the invention, the step of forming the tray includes thermoforming of the tray from a sheet of the material from which the tray is to be formed.

Thermoforming is known to be a cost-efficient, fast and reliable way of forming different kinds of parts from plastic materials as the ones used for the present invention.

In an embodiment of the invention, the step of providing the sealing surface with a layer of adhesive includes application of the adhesive by means of roll coating.

Roll coating is a well-known and reliable method for applying materials such as the adhesive used in the present invention to a given surface.

In an embodiment of the invention, the adhesive is of a type that reaches a free flowing state at a temperature below 150 °C and is solid and non-tacky at room temperature.

Using an adhesive with such properties assures that the adhesive can be applied at a temperature that does not deform or cause any form of damage to the material from which the tray is made, and that the trays can be stacked afterwards without sticking to each other.

In an embodiment of the invention, the method further comprises a step of bonding a lid to the sealing surface of the tray by means of a process that involves heat activation of the adhesive.

Bonding a lid to the sealing surface by heat activating the applied adhesive enables for obtaining a gas-proof seal between the tray and the lid, even if the sealing rim is contaminated with meat juice or the like.

### Figures

An exemplary embodiment of the invention will be described more in detail in the following with reference to the figures of which
- fig. 1: shows an exploded view of a container according to an embodiment of the invention,
- fig.2a: shows a cross-sectional view of a container according to an embodiment of the invention,
- fig. 2b: shows an enlarged detail of fig. 2a,
- fig. 3a: shows a top view of a container according to an embodiment of the invention,
- fig. 3b: shows a side view of the same container as shown in fig. 3a, and
- fig. 4: illustrates schematically an apparatus for making trays of containers according to an embodiment of the invention.

### Detailed description of the invention

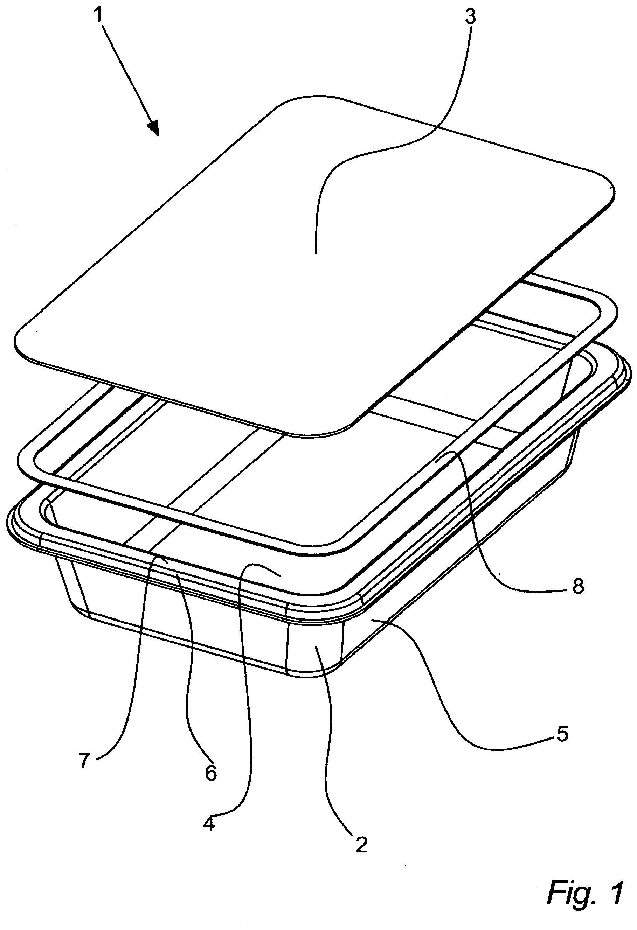

Fig. 1 illustrates an exploded view of a container 1 according to an embodiment of the invention. The illustrated container 1 consists of two main parts, namely a tray 2 and a lid 3.

The tray 2 comprises a bottom part 4, a number of side walls 5 and a peripheral sealing rim 6 at its top. The sealing rim 6 has an upward facing and flat sealing surface 7, onto which is placed a layer of an adhesive 8 extending along the full circumference of the tray 2.

In the shown embodiment, the tray 2 has four straight side walls 5 connected to each others by rounded corners. However, the tray 2 may be of any shape, such as for instance circular (with one single, curved side wall) or triangular (with three straight side walls).

The tray 2 is made of amorphous polyethylene terephthalate (APET), which can be transparent (natural) or coloured (either opaque or transparent). Typically, the tray 2 is thermoformed from a sheet of material. This sheet comprises more than one layer, typically three layers, of APET, of which the outer layers may also comprise some additional material making the sheet easier to roll off and the stacked trays easier to separate from each other.

In order to minimise the crystallisation of the polyethylene terephthalate (PET) so that the resulting material is still essentially amorphous, the period of time, in which the material has a temperature, at which there is a significant rate of crystallisation is minimised. Furthermore, it is advantageous to use a modified PET rather than the homopolymer type. Preferably, the modified PET contains between 1.5 % and 2 % (or at least less than 15 %) of one or more suitable comonomers, such as isophthalic acid (IPA), cyclohexanedimethanol (CHDM) or diethylene glycol. Such compositions result in materials generally known as APET.

For manufacturing purposes, the molecular length of the PET defined by the so-called intrinsic viscosity is ideally between 0.7 dl/g and 0.8 dl/g. An intrinsic viscosity between 0.7 dl/g and 0.9 dl/g is acceptable, whereas PET materials having intrinsic viscosities below 0.6 dl/g or above 1.1 dl/g are not relevant for this purpose.

The adhesive 8 is preferably based on polyethylene copolymer or terpolymer and waxes. It is only placed on the sealing surface 7 of the sealing rim 6, typically by roll coating, so that none of the adhesive 8 will end up on the skeletal waste from the thermoforming or inside the tray 2 after sealing of the container 1.

In preferred embodiments, the adhesive 8 consists of 10-60 % of a petroleum wax or a polyethylene wax and 40-90 % of an ethylene copolymer, an ethylene terpolymer or a blend of such polymers. The ethylene copolymer(s) and/or terpolymer(s) comprise at least 60 % of ethylene, at least 5 % of a first monomer and optionally between 0.1 % and 5 % of a second monomer, where the first monomer is chosen between vinyl acetate, methacrylic acid, alkyl acrylate and alkyl methacrylate, and the second monomer is chosen between maleic acid, maleic anhydride, fumaric acid, acrylic acid and glycidyl methacrylate.

The adhesive 8 has a viscosity suitable for roll coating. It reaches a free flowing state at a temperature below 150 °C and becomes non-tacky in less than five seconds at room temperature after application to the sealing surface 7 of the tray 2. This property enables the trays to be stacked without sticking to each other shortly after the thermoforming and roll coating. Afterwards, the trays 2 can be stored more than three months before being filled and sealed, and the adhesive 8 can still be heat activated in a sealing machine. When a container 1 is sealed, the adhesive 8 melts and welds together a tray 2 and a lid 3.

The lid 3 can also be made from APET. However, in order to assure a better sealing of the container 1, at least those parts of the lower surface of the lid 3, which are heat sealed to the sealing rim 6 of the tray 2 are preferably coated with a sealing layer (not shown) of another material, such as polyethylene, which are better bonded by the adhesive 8. In general, the same types of lids 3 can be used as for the well-known APET-PE trays.

The ability to protect foodstuff and the storage time for a container 1 according to the invention is similar to those of APET-PE trays. Due to the adhesive 8, the seal of the container 1 is as strong as the ones of APET-PE trays, although the sealing can be made at temperatures, which cause no warping of the APET material of the trays 2. Thus, the bonded area is as gas-proof for the modified atmosphere, e.g. nitrogen, oxygen or carbon dioxide, surrounding the foodstuff as in any APET-PE seal.

Test have shown, that containers 1 according to the invention have a weld strength lesser than 0.8 bar(a) measured in a vacuum tank, which is a common way of testing the seal strength of containers used in the food packaging industry. This means that the seal can withstand an internal overpressure of at least 0.2 bar and normally 0.4-0.6 bar in the sealed tray 2.

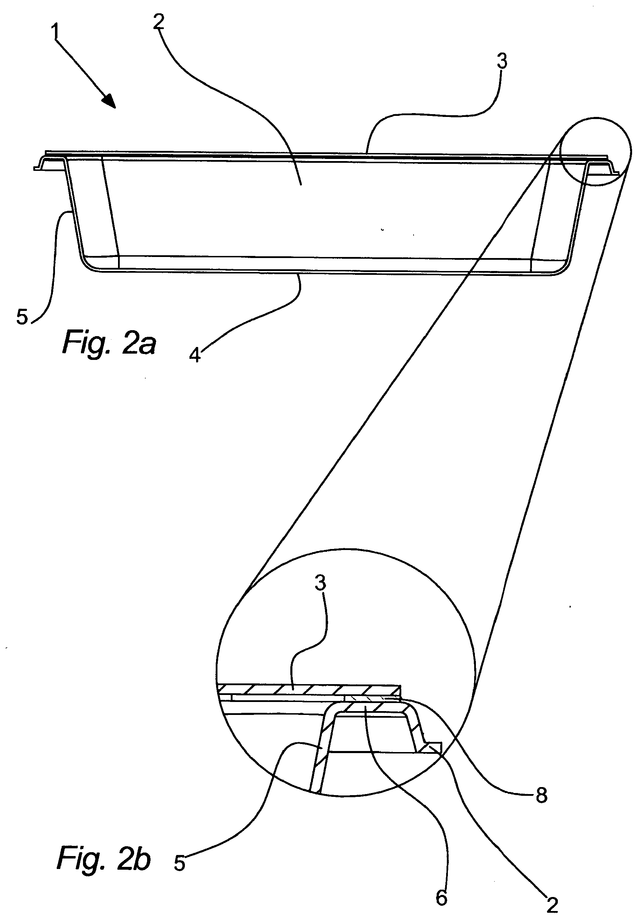

Fig. 2a shows a cross-sectional view of the same container 1 as shown in fig. 1, and fig. 2b shows an enlarged detail thereof, illustrating the position of the adhesive 8 between the lid 3 and the sealing rim 6 of the tray 2, when the container 1 is sealed.

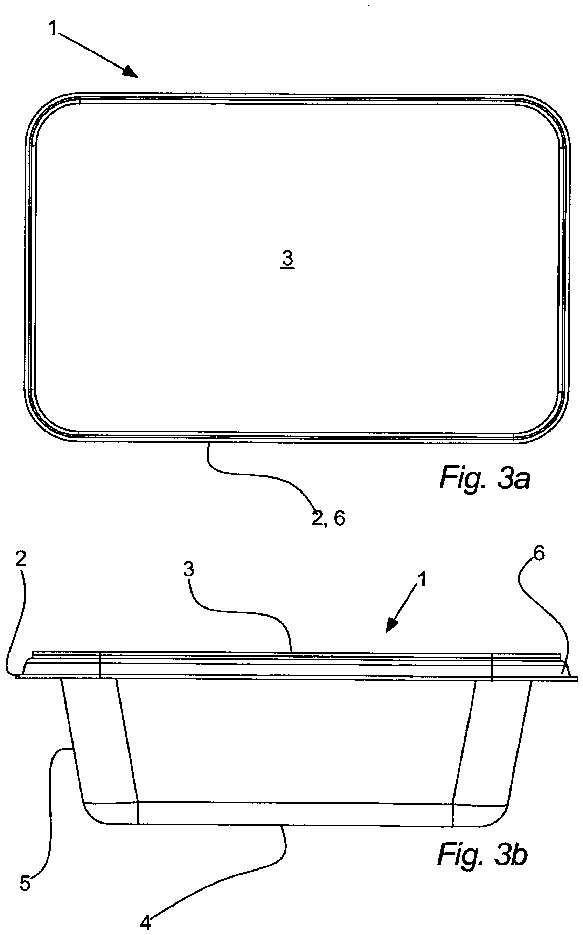

Figs. 3a and 3b show a top view and a side view, respectively, of the container 1 with the lid 3 heat sealed to the sealing rim 6 of the tray 2.

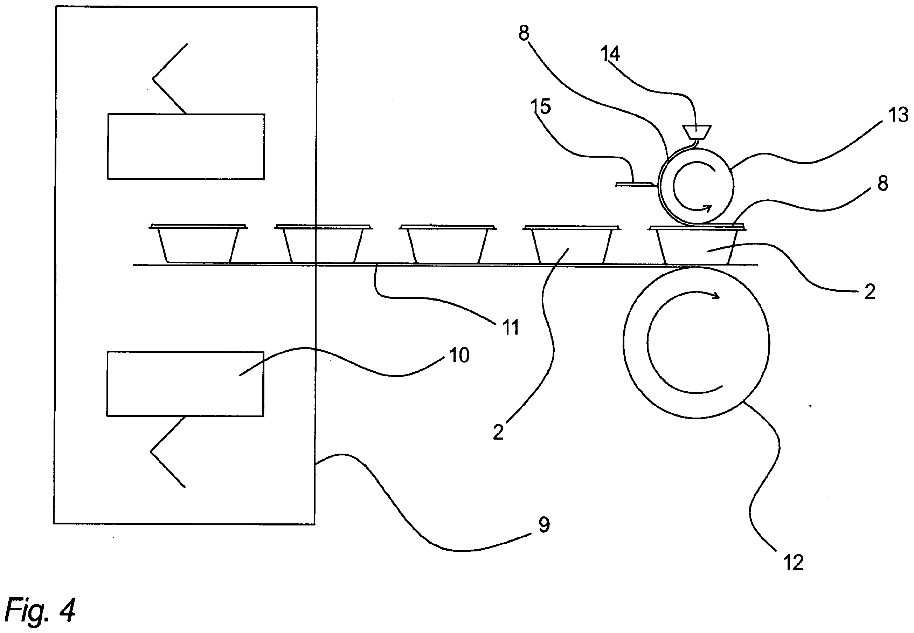

Fig. 4 illustrates schematically an apparatus for making trays 2 of containers 1 according to an embodiment of the invention.

The trays 2 are thermoformed in a machine 9 comprising a number of thermoforming tools 10. The trays 2 leave the machine 9 carried by a conveyor 11 driven by a roll 12 and are brought in "kiss contact" with an applicator roll 13. Adhesive 8 is applied to the applicator roll 13 by a hopper 14, and the thickness of the coating of adhesive 8 applied to the sealing surface 7 of the trays 2 is controlled by means of a doctor blade 15.

During the roll coating, the applicator roll 13 and, thus, the adhesive 8 is heated to a temperature at which the adhesive 8 is free flowing and at the same time too hot causing warping or other damage to the APET material in the trays 2. A temperature around 150 °C has shown to be suitable.

Alternatively, the adhesive 8 may be applied from a toluene solution, in which case the applicator roll 13 may be kept at ambient temperature. In this case, the trays 2 are preferably passed through a heated drying tunnel or the like (not shown) after application of the adhesive 8 to remove the solvent from the adhesive 8.

### List of reference numbers

- 1.: Container
- 2.: Tray
- 3.: Lid
- 4.: Bottom part
- 5.: Side wall
- 6.: Sealing rim
- 7.: Sealing surface
- 8.: Adhesive
- 9.: Thermoforming apparatus
- 10.: Thermoforming tool
- 11.: Conveyor
- 12.: Conveyor roll
- 13.: Applicator roll
- 14.: Hopper
- 15.: Doctor blade

## Claims

1. A container (1) for foodstuff, said container comprising
a tray (2) formed from a sheet of material comprising more than one layer, where the material of each of the layers of the formed tray comprises at least 85 % of amorphous polyethylene terephthalate, said tray comprising
a bottom part (4),
one or more side walls (5) and
a peripheral sealing rim (6) at its top, said sealing rim having a substantially flat upward facing sealing surface (7),
wherein, in addition to the material from which the tray is made, the sealing surface is provided with a layer of an adhesive (8) along the full circumference of the tray.

2. A container according to claim 1, wherein the material of each of the layers of the formed tray has an intrinsic viscosity between 0.6 dl/g and 1.1 dl/g, preferably between 0.7 dl/g and 0.9 dl/g, most preferably between 0.7 dl/g and 0.8 dl/g.

3. A container according to claim 1 or 2, wherein the amorphous polyethylene terephthalate comprises up to 15 %, preferably between 1.5 % and 2 %, of a comonomer.

4. A container according to claim 3, wherein the comonomer is isophthalic acid (IPA), cyclohexanedimethanol (CHDM) or diethylene glycol.

5. A container according to any of the preceding claims, wherein the thickness of material of the tray is between 200 µm and 1200 µm.

6. A container according to any of the preceding claims, wherein the adhesive is of a type that reaches a free flowing state at a temperature below 150 °C and is solid and non-tacky at room temperature.

7. A container according to any of the preceding claims, wherein the adhesive comprises an ethylene copolymer, an ethylene terpolymer or a blend of such polymers, as well as a wax.

8. A container according to claim 7, wherein the adhesive comprises
between 10 % and 60 % of a petroleum wax or a polyethylene wax and
between 40 % and 90 % of an ethylene copolymer, an ethylene terpolymer or a blend of such polymers.

9. A container according to claim 7 or 8, wherein the ethylene copolymer(s) and/or ethylene terpolymer(s) comprise
at least 60 % of ethylene,
at least 5 % of a first monomer, said first monomer being chosen from the list containing: vinyl acetate, methacrylic acid, alkyl acrylate and alkyl methacrylate, and optionally
between 0.1 % and 5 % of a second monomer, said second monomer being chosen from the list containing: maleic acid, maleic anhydride, fumaric acid, acrylic acid and glycidyl methacrylate.

10. A container according to any of the preceding claims further comprising a lid (3), which is bonded to the tray by means of the adhesive forming a gas-proof seal along the sealing rim.

11. A container according to claim 10, wherein the lid is hard and dimensionally stable.

12. A container according to claim 11, wherein the thickness of material of the hard and dimensionally stable lid is between 200 µm and 1200 µm.

13. A container according to claim 11 or 12, wherein the hard and dimensionally stable lid is made of amorphous polyethylene terephthalate.

14. A container according to claim 10, wherein the lid consists of a soft and flexible lidding film.

15. A container according to claim 14, wherein the thickness of material of the soft and flexible lid is between 15 µm and 100 µm.

16. A container according to claim 14 or 15, wherein the soft and flexible lid is made of polyethylene terephthalate.

17. A container according to any of claims 10-16, wherein at least a part of a lower surface of the lid is coated with a sealing layer of polyethylene, polyethylene copolymer or polyethylene terpolymer in order to be better adapted to be bonded to the sealing rim by a sealing process involving the use of heat and pressure.

18. A method of producing a container for foodstuff, said method comprising the steps of:
forming a tray made from a sheet of material comprising more than one layer, where the material of each of the layers of the formed tray comprises at least 85 % of amorphous polyethylene terephthalate, said tray comprising a bottom part, one or more side walls and a peripheral sealing rim at its top, said sealing rim having a substantially flat upward facing sealing surface; and
providing the sealing surface with a layer of an adhesive along the full circumference of the tray.

19. A method according to claim 18, wherein the step of forming the tray includes thermoforming of the tray from a sheet of the material from which the tray is to be formed.

20. A method according to claim 18 or 19, wherein the step of providing the sealing surface with a layer of adhesive includes application of the adhesive by means of roll coating.

21. A method according to any of claims 18-20, wherein the adhesive is of a type that reaches a free flowing state at a temperature below 150°C and is solid and non-tacky at room temperature.

22. A method according to any of claims 18-21 further comprising a step of bonding a lid to the sealing surface of the tray by means of a process that involves heat activation of the adhesive.

## Patentansprüche

1. Behälter (1) für Lebensmittel, wobei der genannte Behälter Folgendes umfasst:
eine Schale (2), die aus einem Materialbogen gebildet ist, der mehr als eine Lage umfasst, wobei das Material jeder der Lagen der gebildeten Schale wenigstens 85 % amorphes Polyethylenterephthalat umfasst, wobei die genannte Schale Folgendes umfasst:
einen Bodenteil (4),
eine oder mehrere Seitenwände (5), und
eine periphere Dichtlippe (6) am oberen Ende, wobei die genannte Dichtlippe eine im Wesentlichen flache, nach oben weisende Dichtungsfläche (7) hat,
wobei die Dichtungsfläche zusätzlich zu dem Material, aus dem die Schale gefertigt ist, eine Lage eines Klebstoffs (8) über den vollen Umfang der Schale aufweist.

2. Behälter nach Anspruch 1, wobei das Material jeder der Lagen der gebildeten Schale eine Eigenviskosität zwischen 0,6 dl/g und 1,1 dl/g, vorzugsweise zwischen 0,7 dl/g und 0,9 dl/g, am meisten bevorzugt zwischen 0,7 dl/g und 0,8 dl/g hat.

3. Behälter nach Anspruch 1 oder 2, wobei das amorphe Polyethylenterephthalat bis zu 15 %, vorzugsweise zwischen 1,5 % und 2 % eines Comonomers umfasst.

4. Behälter nach Anspruch 3, wobei das Comonomer Isophthalsäure (IPA), Cyclohexandimethanol (CHDM) oder Diethylenglykol ist.

5. Behälter nach einem der vorherigen Ansprüche, wobei die Dicke des Materials der Schale zwischen 200 µm und 1200 µm liegt.

6. Behälter nach einem der vorherigen Ansprüche, wobei der Klebstoff von einem Typ ist, der einen freifließenden Zustand bei einer Temperatur unter 150°C erreicht und bei Raumtemperatur fest und nicht klebrig ist.

7. Behälter nach einem der vorherigen Ansprüche, wobei der Klebstoff Folgendes umfasst:
ein Ethylen-Copolymer, ein Ethylen-Terpolymer oder eine Mischung aus solchen Polymeren, sowie
ein Wachs.

8. Behälter nach Anspruch 7, wobei der Klebstoff Folgendes umfasst:
zwischen 10 % und 60 % eines Petroleumwachses oder eines Polyethylenwachses, und
zwischen 40 % und 90 % eines Ethylen-Copolymers, eines Ethylen-Terpolymers oder einer Mischung aus solchen Polymeren.

9. Behälter nach Anspruch 7 oder 8, wobei das/die Ethylen-Copolymer(e) und/oder Ethylen-Terpolymer(e) Folgendes umfasst/umfassen:
wenigstens 60 % Ethylen,
wenigstens 5 % eines ersten Monomers, wobei das genannte erste Monomer ausgewählt ist aus der Liste, die Folgendes beinhaltet: Vinylacetat, Methacrylsäure, Alkylacrylat und Alkylmethacrylat, und optional
zwischen 0,1 % und 5 % eines zweiten Monomers, wobei das genannte zweite Monomer ausgewählt ist aus der Liste, die Folgendes beinhaltet: Maleinsäure, Maleinsäureanhydrid, Fumarsäure, Acrylsäure und Glycidylmethacrylat.

10. Behälter nach einem der vorherigen Ansprüche, der ferner einen Deckel (3) umfasst, der mit dem Klebstoff auf die Schale geklebt ist und eine gasundurchlässige Dichtung entlang der Dichtlippe bildet.

11. Behälter nach Anspruch 10, wobei der Deckel hart und maßstabil ist.

12. Behälter nach Anspruch 11, wobei die Materialdicke des harten und maßstabilen Deckels zwischen 200 µm und 1200 µm liegt.

13. Behälter nach Anspruch 11 oder 12, wobei der harte und maßstabile Deckel aus amorphem Polyethylenterephthalat gefertigt ist.

14. Behälter nach Anspruch 10, wobei der Deckel aus einer weichen und flexiblen Deckelfolie besteht.

15. Behälter nach Anspruch 14, wobei die Materialdicke des weichen und flexiblen Deckels zwischen 15 µm und 100 µm liegt.

16. Behälter nach Anspruch 14 oder 15, wobei der weiche und flexible Deckel aus Polyethylenterephthalat besteht.

17. Behälter nach einem der Ansprüche 10-16, wobei wenigstens ein Teil einer Unterseite des Deckels mit einer Dichtungslage aus Polyethylen, Polyethylen-Copolymer oder Polyethylen-Terpolymer beschichtet ist, so dass sie besser zum Kleben auf die Dichtlippe mit einem Dichtungsprozess geeignet ist, der die Anwendung von Wärme und Druck beinhaltet.

18. Verfahren zum Erzeugen eines Behälters für Lebensmittel, wobei das genannte Verfahren die folgenden Schritte beinhaltet:
Bilden einer Schale aus einem Materialbogen, der mehr als eine Lage umfasst,
wobei das Material jeder der Lagen der gebildeten Schale wenigstens 85 % amorphes Polyethylenterephthalat umfasst, wobei die genannte Schale einen Bodenteil, eine oder mehrere Seitenwände und eine periphere Dichtlippe am oberen Ende umfasst, wobei die genannte Dichtlippe eine im Wesentlichen flache, nach oben weisende Dichtungsfläche aufweist; und
Versehen der Dichtungsfläche mit einer Lage eines Klebstoffs über den vollen Umfang der Schale.

19. Verfahren nach Anspruch 18, wobei der Schritt des Bildens der Schale das Thermoformen der Schale aus einem Bogen des Materials beinhaltet, aus dem die Schale gebildet werden soll.

20. Verfahren nach Anspruch 18 oder 19, wobei der Schritt des Versehens der Dichtungsfläche mit einer Schicht aus Klebstoff das Aufbringen des Klebstoffs durch Walzenbeschichtung beinhaltet.

21. Verfahren nach einem der Ansprüche 18-20, wobei der Klebstoff von einem Typ ist, der einen freifließenden Zustand bei einer Temperatur unter 150°C erreicht und der bei Raumtemperatur fest und nicht klebrig ist.

22. Verfahren nach einem der Ansprüche 18-21, das ferner einen Schritt des Klebens eines Deckels auf die Dichtungsfläche der Schale mit einem Prozess beinhaltet, der Wärmeaktivierung des Klebstoffs beinhaltet.

## Revendications

1. Contenant (1) pour produits alimentaires, ledit contenant comprenant :
un plateau (2) formé à partir d'une feuille de matière comportant plus d'une couche, où la matière de chacune des couches du plateau formé comprend au moins 85 % de téréphtalate de polyéthylène amorphe, ledit plateau comportant :
une partie inférieure (4),
une ou plusieurs parois latérales (5) et
un rebord d'étanchéisation périphérique (6) au niveau de sa partie supérieure,
ledit rebord d'étanchéisation possédant une surface d'étanchéisation (7) sensiblement plate dirigée vers le haut,
cas dans lequel, en plus de la matière à partir de laquelle le plateau est réalisé,
la surface d'étanchéisation est dotée d'une couche d'adhésif (8) le long de la circonférence totale du plateau.

2. Contenant selon la revendication 1, la matière de chacune des couches du plateau formé présentant une viscosité intrinsèque entre 0,6 dl/g et 1,1 dl/g, de préférence entre 0,7 dl/g et 0,9 dl/g, idéalement entre 0,7 dl/g et 0,8 dl/g.

3. Contenant selon la revendication 1 ou 2, le téréphtalate de polyéthylène amorphe comprenant jusqu'à 15 %, de préférence entre 1,5 % et 2 %, d'un co-monomère.

4. Contenant selon la revendication 3, le co-monomère étant l'acide isophtalique (IPA), le cyclohexanediméthanol (CHDM) ou le diéthylène glycol.

5. Contenant selon l'une quelconque des revendications précédentes, l'épaisseur de matière du plateau se situant entre 200 µm et 1200 µm.

6. Contenant selon l'une quelconque des revendications précédentes, l'adhésif étant d'un type qui atteint un état de fluage libre à une température inférieure à 150°C et étant solide et non poisseux à la température ambiante.

7. Contenant selon l'une quelconque des revendications précédentes, l'adhésif comprenant :
un copolymère d'éthylène, un terpolymère d'éthylène ou un mélange de tels polymères, ainsi qu' une cire.

8. Contenant selon la revendication 7, l'adhésif comprenant :
entre 10 % et 60 % d'une cire de pétrole ou d'une cire de polyéthylène, et
entre 40 % et 90 % d'un copolymère d'éthylène, d'un terpolymère d'éthylène ou d'un mélange de tels polymères.

9. Contenant selon la revendication 7 ou 8, le(s) copolymère(s) d'éthylène et / ou le(s) terpolymère(s) d'éthylène comprenant :
au moins 60 % d'éthylène,
au moins 5 % d'un premier monomère, ledit premier monomère étant choisi parmi la liste contenant les substances suivantes : acétate de vinyle, acide méthacrylique, acrylate d'alkyle et méthacrylate d'alkyle, et facultativement entre 0,1 % et 5 % d'un deuxième monomère, ledit deuxième monomère étant choisi parmi la liste contenant les substances suivantes : acide maléique, anhydride maléique, acide fumarique, acide acrylique et méthacrylate de glycidyle.

10. Contenant selon l'une quelconque des revendications précédentes, comprenant en outre un couvercle (3) qui est liaisonné au plateau au moyen de l'adhésif lequel forme un joint étanche aux gaz le long du rebord d'étanchéisation.

11. Contenant selon la revendication 10, le couvercle étant dur et dimensionnellement stable.

12. Contenant selon la revendication 11, l'épaisseur de matière du couvercle dur et dimensionnellement stable se situant entre 200 µm et 1200 µm.

13. Contenant selon la revendication 11 ou 12, le couvercle dur et dimensionnellement stable étant réalisé en téréphtalate de polyéthylène amorphe.

14. Contenant selon la revendication 10, le couvercle consistant en une pellicule d'operculage molle et souple.

15. Contenant selon la revendication 14, l'épaisseur de matière du couvercle mou et souple se situant entre 15 µm et 100 µm.

16. Contenant selon la revendication 14 ou 15, le couvercle mou et souple étant réalisé en téréphtalate de polyéthylène.

17. Contenant selon l'une quelconque des revendications 10 à 16, au moins une partie d'une surface inférieure du couvercle étant revêtue d'une couche d'étanchéisation de polyéthylène, de copolymère de polyéthylène ou de terpolymère de polyéthylène afin d'être mieux conçue pour être liaisonnée au rebord d'étanchéisation grâce à un processus d'étanchéisation faisant intervenir la chaleur et la pression.

18. Procédé destiné à produire un contenant pour produits alimentaires, ledit procédé comprenant les étapes consistant à :
former un plateau réalisé à partir d'une feuille de matière comportant plus d'une couche, où la matière de chacune des couches du plateau formé comprend au moins 85 % de téréphtalate de polyéthylène amorphe, ledit plateau comportant une partie inférieure, une ou plusieurs parois latérales et un rebord d'étanchéisation périphérique au niveau de sa partie supérieure, ledit rebord d'étanchéisation possédant une surface d'étanchéisation sensiblement plate dirigée vers le haut ; et
munir la surface d'étanchéisation d'une couche d'adhésif le long de la circonférence totale du plateau.

19. Procédé selon la revendication 18, l'étape de formation du plateau incluant le thermoformage du plateau à partir d'une feuille de matière à partir de laquelle le plateau est destiné à être formé.

20. Procédé selon la revendication 18 ou 19, l'étape consistant à munir la surface d'étanchéisation d'une couche d'adhésif incluant l'application de l'adhésif au moyen d'une enduction à rouleaux.

21. Procédé selon l'une quelconque des revendications 18 à 20, l'adhésif étant d'un type qui atteint un état de fluage libre à une température inférieure à 150°C et étant solide et non poisseux à la température ambiante.

22. Procédé selon l'une quelconque des revendications 18 à 21, comprenant en outre une étape consistant à liaisonner un couvercle sur la surface d'étanchéisation du plateau au moyen d'un processus qui fait intervenir une activation thermique de l'adhésif.
